(19) Europäisches Patentamt
European Patent Office
Office européen des brevets

(11) **EP 0 786 668 B1**

(12) **FASCICULE DE BREVET EUROPEEN**

(45) Date de publication et mention
de la délivrance du brevet:
**28.08.2002 Bulletin 2002/35**

(51) Int Cl.⁷: **G01S 3/12**

(21) Numéro de dépôt: **97400060.6**

(22) Date de dépôt: **14.01.1997**

(54) **Dispositif de radiocommunication et de localisation**

Funkkommunikations/Ortungs-Vorrichtung

Device for radiocommunication and localisation

(84) Etats contractants désignés:
**CH DE ES FR GB GR IT LI NL SE**

(30) Priorité: **23.01.1996 FR 9600725**

(43) Date de publication de la demande:
**30.07.1997 Bulletin 1997/31**

(73) Titulaire: **Thales**
**75008 Paris (FR)**

(72) Inventeurs:
 • **Auger, Gérard, Thomson-CSF, SCPI**
 **94117 Arcueil Cedex (FR)**
 • **Bacelon, Olivier, Thomson-CSF, SCPI**
 **94117 Arcueil Cedex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
 EP-A- 0 675 373     US-A- 3 872 477
 US-A- 4 475 106

 • **PATENT ABSTRACTS OF JAPAN vol. 8, no. 142
 (E-254), 3 Juillet 1984 & JP 59 052927 A (HONDA
 GIKEN KOGYO KK.), 27 Mars 1984,**

## Description

La présente invention concerne un dispositif de radiocommunication et de localisation qui permet à un auditeur muni d'un casque d'écoute de localiser des interlocuteurs.

Parmi les systèmes de localisation terrestres, il est connu d'utiliser des radiogoniomètres. Ces systèmes assurent la mesure de l'angle d'arrivée d'ondes électromagnétiques sur des antennes . Leur intérêt est qu'ils permettent à un opérateur, soit de se situer à l'intérieur d'une zone géographique déterminée relativement par exemple à un ensemble de balises d'émission radioélectrique, soit encore, en utilisant plusieurs radiogoniomètres, d'avoir une connaissance générale de la position géographique de plusieurs sources d'émission radioélectrique.

Ces systèmes conviennent pour le positionnement et le guidage de mobiles mécanisés, mais ils sont d'un emploi très contraignant pour des utilisateurs piétons ayant à progresser en groupe dans un milieu éventuellement hostile et où il est impératif que chaque piéton ait une connaissance aussi précise que rapide de sa position géographique réelle mais également de sa position par rapport aux autres piétons du groupe. Ce type de situation se rencontre notamment dans le domaine militaire pour le ralliement par exemple de parachutistes. Il peut également se rencontrer dans le domaine civil pour le guidage de piétons dans une exposition. Dans l'état actuel des radiocommunications les seuls moyens utilisables dans ces cas sont des moyens de transmission par phonie par lesquels chaque opérateur peut définir sa propre position relativement à celles des autres du groupe grâce au contenu de messages qu'il reçoit. Cependant les renseignements fournis par ces messages restent insuffisants et peu précis pour situer rapidement un interlocuteur et en tout état de cause, ne facilitent pas une coordination rapide des actions et plus particulièrement des déplacements du groupe.

Le but de l'invention est de pallier les inconvénients précités.

A cet effet l'invention a pour objet, un dispositif de radiocommunication et de localisation du type comprenant un réseau d'antennes couplé respectivement à un dispositif de goniométrie et à un récepteur radio délivrant des signaux de phonie à un opérateur respectivement sur deux écouteurs, caractérisé en ce qu'il comprend un dispositif de repérage de la position de la tête de l'opérateur et un dispositif générateur de signaux de phonie couplé au dispositif de goniométrie au récépteur radio et-au dispositif de repérage pour appliquer respectivement sur les écouteurs des signaux de phonie déphasés entre eux de façon à donner à l'opérateur l'impression que le signal de phonie qu'il entend provient de la direction d'arrivée des ondes radio déterminée par le dispositif de goniométrie.

L'invention a pour avantage qu'elle permet grâce au réseau d'antennes de réception, d'associer, à chaque signal audiofréquence reçu, une direction de l'espace qui est restituée dans les écouteurs de l'opérateur en faisant croire à ce dernier que le son provient non pas des écouteurs mais d'un point précis de l'espace ou se trouve situé son interlocuteur.

Elle a également pour avantage de permettre de localiser la direction de provenance d'émissions en laissant à l'opérateur une impression d'éloignement sans que nécessairement émetteurs et récepteurs soient en vue directe tout en permettant la réception de plusieurs émissions simultanées.

D'autres caractéristiques et avantages de l'invention apparaîtront à l'aide de la description qui suit faite en regard des dessins annexés qui représentent :

La figure 1 un mode de réalisation d'un récepteur selon l'invention.

La figure 2 une composition vectorielle permettant de déterminer la direction de provenance du signal audiofréquence par rapport à la tête d'un opérateur.

La figure 3 une composition vectorielle permettant de donner à un opérateur l'impression qu'il reçoit le son d'un point précis de l'espace d'où serait situé son interlocuteur.

Le dispositif selon l'invention qui est représenté à la figure 1 comprend un réseau d'antennes 1 couplé respectivement à un dispositif de goniométrie 2 et à un récepteur radio 3. Il comprend également un dispositif de repérage 4 que l'opérateur porte sur sa tête et qui est composé, par exemple, d'un magnétomètre d'un inclinomètre ou de tout dispositif équivalent, permettant de déterminer l'orientation de la tête relativement à des directions fixes de l'espace telles que par exemple le nord géographique ou le plan horizontal du lieu. Un dispositif générateur de signaux de phonie 5, couplé au dispositif de goniométrie 2, au récepteur radio 3 et au dispositif de repérage 4, fournit des signaux de phonie à deux écouteurs gauche et droit 6 et 7. Un émetteur, non représenté, peut être associé au dispositif pour émettre des messages phonie éventuellement assortis de motifs de synchronisation de façon omnidirectionnelle.

Le dispositif de goniométrie 2 et le récepteur radio 3 fonctionnent en parallèle. Lorsque le dispositif de goniométrie 2 détecte une activité radio, il tente de déterminer sa direction de provenance $\theta 1$ en effectuant par exemple, comme cela est décrit dans la demande de brevet Français 2 718 246, des calculs de différence de phase entre les signaux reçus sur chaque couple d'antennes du réseau 1. Dans le cas d'un réseau composé seulement de deux antennes espacées d'une longueur d, le calcul de la direction d'arrivée $\theta 1$ d'une émission radio peut être obtenue simplement par la relation :

$$\theta 1 = \operatorname{Arcsin}(\lambda.\phi/2.\pi.d) \qquad (1)$$

L'angle $\theta 1$ est additionné dans le dispositif générateur de signaux 5 conformément à la composition vectorielle de la figure 2, à un angle $\theta 2$ fourni par le dis-

positif de repérage 4 représentant l'orientation de la tête de l'opérateur par rapport à la direction de référence. Le résultat de cette addition fournit un angle θ qui représente la direction θ de provenance du signal radio par rapport à la tête. La direction de provenance définie par l'angle θ est utilisée dans le dispositif générateur de signaux 5 pour déphaser les signaux d'excitation des écouteurs 6 et 7 et donner à l'opérateur l'impression que le signal sonore qu'il entend provient de la direction θ et non pas des écouteurs ceci peut être réalisé en appliquant par exemple, un déphasage φ sur chaque fréquence F du signal vocal éventuellement obtenue à l'aide d'un calcul connu de transformation de Fourier rapide, suivant une relation de la forme :

$$\Phi = 2\pi.F.a.\sin\theta/V \qquad (2)$$

dans laquelle :

- a représente la distance entre les deux oreilles de l'opérateur
- et V représente la vitesse du son.

La relation (2) reflète la différence de temps nécessaire pour simuler la différence de marche du signal sonore qui est supposé provenir d'un point éloigné de l'espace en atteignant successivement ou simultanément chacune des oreilles suivant l'angle θ de provenance.

Comme la puissance des signaux radioélectrique reçus dépend de la distance séparant le dispositif selon l'invention de la source d'émission, un dispositif, non représenté, permet dans le dispositif générateur de signaux 5, de rendre la puissance moyenne du signal sonore appliqué aux écouteurs, proportionnelle à la puissance du signal radio reçu pour donner à l'opérateur la possibilité d'évaluer la distance le séparant de l'émetteur de l'émission qu'il reçoit. Naturellement ce dispositif ne vaut que si les puissances moyennes des sources d'émission ont été préalablement étalonnées. L'affaiblissement du signal sonore peut être obtenu de la façon représentée par le graphe de la figure 3.

Le dispositif décrit précédemment est plus particulièrement adapté pour une configuration de transmission ne comportant qu'un émetteur. Dans ce cas il peut comprendre un poste de radio numérique à fréquence fixe compatible de celle de l'émetteur et un radiogoniomètre multivoie à 5 antennes par exemple, dont la bande de fréquence est compatible de celle du poste radio. Pour une configuration comportant plusieurs émetteurs il peut être envisagé de disposer d'un récepteur multivoie permettant de recevoir plusieurs conversations simultanément et d'un radiogoniomètre multivoie pour repérer chacune des directions d'arrivée des émissions radio correspondantes. De la sorte l'opérateur peut suivre plusieurs conversations simultanées et peut localiser pour chacune d'entre elles sa direction de provenance.

L'exploitation du dispositif par des piétons est facilitée en utilisant des fréquences de trafic élevées, supérieures par exemple à 1 GHz de façon à permettre en utilisant les techniques connues de métallisation, l'intégration du réseau d'antenne dans un casque. Dans ce cas, le dispositif peut être simplifié en utilisant un goniomètre capable de repérer l'angle d'arrivée des émissions dans les trois dimensions de l'espace ce qui supprime, du fait que les antennes sont portées par le casque, la nécessité d'utiliser un dispositif de localisation du réseau d'antennes par rapport à la tête de l'opérateur.

Naturellement les modes de réalisation de l'invention ne sont pas uniques et d'autres variantes peuvent être apportées en fonction des modes de communication et des moyens de radiogoniométrie utilisés. Ces variantes peuvent également dépendre des types de message transmis. Par exemple, si les messages sont transmis sous la forme de données numérique il suffit d'utiliser un dispositif de synthèse vocale pour convertir ces messages en phonie.

**Revendications**

1. Dispositif de radiocommunication et de localisation du type comprenant un réseau d'antennes (1) couplé respectivement à un dispositif de goniométrie (2) et à un récepteur radio (3 ) délivrant des signaux de phonie à un opérateur respectivement sur deux écouteurs (6,7), **caractérisé en ce qu'**il comprend un dispositif de repérage (4) de la position de la tête de l'opérateur et un dispositif générateur de signaux de phonie (5) couplé au dispositif de goniométrie (2) au récepteur radio (3) et au dispositif de repérage (4) pour appliquer respectivement sur les écouteurs des signaux de phonie déphasés entre eux de façon à donner à l'opérateur l'impression que le signal de phonie qu'il entend provient de la direction d'arrivée des ondes radio déterminée par le dispositif de goniométrie (2).

2. Dispositif selon la revendication 1, **caractérisé en ce que** le dispositif de repérage (4) comprend un inclinomètre et un magnétomètre solidaires de la tête de l'opérateur.

3. Dispositif de radiocommunication et de localisation du type comprenant un réseau d'antennes (1) couplé respectivement à un dispositif de goniométrie (2) et à un récepteur radio (3 ) délivrant des signaux de phonie à un opérateur respectivement sur deux écouteurs (6,7), **caractérisé en ce que** ledit réseau d'antennes est solidaire de la tête de l'opérateur et **en ce qu'**il comporte un dispositif générateur de signaux de phonie (5) couplé au dispositif de goniométrie (2) et au récepteur radio (3) pour appliquer respectivement sur les écouteurs des signaux de phonie déphasés entre eux de façon à donner à l'opérateur l'impression que le signal de phonie qu'il entend provient de la direction d'arrivée des ondes radio déterminée par le dispositif de goniométrie (2), ledit dispositif de goniométrie (2) étant adapté à repérer les émissions dans les trois directions de l'espace.

4. Dispositif selon l'une quelconque des revendications 1 à 3, **caractérisé en ce que** le dispositif générateur de signaux de phonie (5) applique sur les écouteurs des signaux de phonie de puissance moyenne proportionnelle à la puissance du signal radio reçu.

5. Dispositif selon l'une quelconque des revendications 1 à 4, **caractérisé en ce que** le récepteur radio (3) et le radiogoniomètre (2) sont des récepteurs multivoies.

6. Dispositif selon l'une quelconque des revendications 1 à 4, **caractérisé en ce que** le récepteur radio (3) est un récepteur monovoie et le radiogoniomètre (2) est un récepteur multivoies

7. Dispositif selon l'une quelconque des revendications 1 à 6, **caractérisé en ce que** le récepteur (3) comprend un dispositif de synthèse vocale pour convertir des messages numériques en phonie.

## Claims

1. Radiocommunication and locating device of the type comprising an antenna array (1) coupled respectively to a direction finding device (2) and to a radio receiver (3) delivering phonic signals to an operator respectively on two headphones (6, 7), **characterized in that** it comprises a device (4) for tagging the position of the head of the operator and a phonic signals generator device (5) coupled to the direction finding device (2) to the radio receiver (3) and to the tagging device (4) so as to apply to the headphones respectively mutually phase-shifted phonic signals so as to give the operator the impression that the phonic signal which he hears is coming from the direction of arrival of the radio waves as determined by the direction finding device (2).

2. Device according to Claim 1, **characterized in that** the tagging device (4) comprises an inclinometer and a magnetometer which are firmly attached to the head of the operator.

3. Radiocommunication and locating device of the type comprising an antenna array (1) coupled respectively to a direction finding device (2) and to a radio receiver (3) delivering phonic signals to an operator respectively on two headphones (6, 7), **characterized in that** the said antenna array is firmly attached to the head of the operator and **in that** it comprises a phonic signals generator device (5) coupled to the direction finding device (2) and to the radio receiver (3) so as to apply to the headphones respectively mutually phase-shifted phonic signals so as to give the operator the impression that the phonic signal which he hears is coming from the direction of arrival of the radio waves as determined by the direction finding device (2), the said direction finding device (2) being adapted to tag the transmissions in the three directions in space.

4. Device according to any one of Claims 1 to 3, **characterized in that** the phonic signals generator device (5) applies to the headphones phonic signals of mean power proportional to the power of the radio signal received.

5. Device according to any one of Claims 1 to 4, **characterized in that** the radio receiver (3) and the radio direction finder (2) are multi-channel receivers.

6. Device according to any one of Claims 1 to 4, **characterized in that** the radio receiver (3) is a mono-channel receiver and the radio direction finder (2) is a multi-channel receiver.

7. Device according to any one of Claims 1 to 6, **characterized in that** the receiver (3) comprises a voice synthesis device for converting digital messages into phonic information.

## Patentansprüche

1. Funkkommunikations- und Lokalisationsvorrichtung des Typs, der eine Gruppenantenne (1) umfaßt, die an eine Goniometrievorrichtung (2) bzw. an einen Funkempfänger (3), der Tonsignale an eine Bedienungsperson über zwei entsprechende Hörer (6, 7) ausgibt, angeschlossen ist, **dadurch gekennzeichnet, daß** sie eine Ortungsvorrichtun (4) für die Position des Kopfes der Bedienungsperson und eine Tonsignal-Erzeugungsvorrichtung (5), die an die Goniometrievorrichtung (2), an den Funkempfänger (3) und an die Ortungsvorrichtung (4) angeschlossen ist, umfaßt, um in die Hörer zueinander phasenverschobene Tonsignale einzugeben, derart, daß in der Bedienungsperson der Eindruck erweckt wird, daß das Tonsignal, das sie hört, aus der Ankunflsrichtung der Funkwellen, die durch die Goniometrievorrichtung (2) bestimmt wird, ankommt.

2. Vorrichtung nach Anspruch 1, **dadurch gekenn-**

**zeichnet, daß** die Ortungsvorrichtung (4) einen Neigungsmesser und ein Magnetometer, die mit dem Kopf der Bedienungsperson fest verbunden sind, umfaßt.

3. Funkkommunikations- und Lokalisationsvorrichtung des Typs, der eine Gruppenantenne (1) umfaßt, die an eine Goniometrievorrichtung (2) bzw. an einen Funkempfänger (3), der Tonsignale an eine Bedienungsperson über zwei entsprechende Hörer (6, 7) ausgibt, angeschlossen ist, **dadurch gekennzeichnet, daß** die Gruppenantenne mit dem Kopf der Bedienungsperson fest verbunden ist und daß sie eine Tonsignal-Erzeugungsvorrichtung (5) aufweist, die an die Goniometrievorrichtung (2) und an den Funkempfänger (3) angeschlossen ist, um in die Hörer entsprechende Tonsignale einzugeben, die zueinander phasenverschoben sind, derart, daß in der Bedienungsperson der Eindruck erweckt wird, daß das Tonsignal, das sie hört, aus der Ankunftsrichtung der Funkwellen, die durch die Goniometrievorrichtung (2) bestimmt wird, ankommt, wobei die Goniometrievorrichtung (2) so beschaffen ist, daß sie die Emissionen in den drei Raumrichtungen ortet.

4. Vorrichtung nach einem der Ansprüche 1 bis 3, **dadurch gekennzeichnet, daß** die Tonsignal-Erzeugungsvorrichtung (5) in die Hörer Tonsignale mittlerer Leistung, die zur Leistung des empfangenen Tonsignals proportional ist, eingibt.

5. Vorrichtung nach einem der Ansprüche 1 bis 4, **dadurch gekennzeichnet, daß** der Funkempfänger (3) und das Funkgoniometer (2) Mehrkanalempfänger sind.

6. Vorrichtung nach einem der Ansprüche 1 bis 4, **dadurch gekennzeichnet, daß** der Funkempfanger (3) ein Einkanalempfänger ist und das Funkgoniometer (2) ein Mehrkanalempfänger ist.

7. Vorrichtung nach einem der Ansprüche 1 bis 6, **dadurch gekennzeichnet, daß** der Empfänger (3) eine Sprachsynthetisierungsvorrichtung umfaßt, um digitale Nachrichten in Töne umzusetzen.